# EUROPÄISCHE PATENTSCHRIFT

(11) **EP 1 763 550 B1**
(45) Veröffentlichungstag und Bekanntmachung des Hinweises auf die Patenterteilung: **21.11.2007**
(21) Anmeldenummer: 05753769.8
(22) Anmeldetag: 22.06.2005
(51) Int. Cl.: C08G 65/00

(54) **VERFAHREN ZUR HERSTELLUNG VON POLYETHERALKOHOLEN**
METHOD FOR PRODUCING POLYETHER ALCOHOLS
PROCEDE DE PRODUCTION D'ALCOOLS DE POLYETHER

(30) Priorität: 30.06.2004 DE 102004031836
(43) Veröffentlichungstag der Anmeldung: 21.03.2007
(73) Patentinhaber: BASF Aktiengesellschaft, 67056 Ludwigshafen (DE)
(72) Erfinder: OSTROWSKI, Thomas, 68199 Mannheim (DE); BAUER, Stephan, 49179 Ostercappeln (DE); LÖFFLER, Achim, 67346 Speyer (DE); WINKLER, Jürgen, 01987 Schwarzheide (DE)
(86) Internationale Anmeldenummer: PCT/EP2005/006717
(87) Internationale Veröffentlichungsnummer: WO 2006/002807

(56) Entgegenhaltungen:
- US-A- 5 689 012
- US-A1- 2003 004 378
- US-A1- 2003 013 920
- US-A1- 2003 013 921
- US-B1- 6 362 126

## Beschreibung

Gegenstand der Erfindung ist ein kontinuierliches Verfahren zur Herstellung von Polyetheralkoholen durch Polymerisation von Alkylenoxiden unter Verwendung von Multimetallcyanidverbindungen als Katalysatoren.

Polyetheralkohole sind seit langem bekannt und werden in großen Mengen technisch hergestellt. Zumeist werden sie als Ausgangsverbindung zur Herstellung von Polyurethanen durch Umsetzung mit Polyisocyanaten verwendet.

Als Katalysatoren zur Herstellung von Polyetheralkoholen werden in jüngerer Zeit häufig Multimetallcyanidverbindungen, auch als DMC-Katalysatoren bezeichnet, eingesetzt. Durch den Einsatz von DMC-Katalysatoren wird der Gehalt an ungesättigten Nebenprodukten minimiert, außerdem verläuft die Umsetzung, verglichen mit den üblichen basischen Katalysatoren, mit einer deutlich höheren Raum-Zeit-Ausbeute.

Ein weiterer Vorteil der DMC-Katalysatoren ist die sogenannte differentielle Katalyse. Darunter ist zu verstehen, dass bei der Reaktion die Alkylenoxide vorzugsweise an Moleküle mit geringer Molmasse angelagert werden. Das ermöglicht die kontinuierliche Herstellung von Polyetheralkoholen in ideal durchmischten Reaktoren.

Auch Verfahren zur kontinuierlichen Herstellung von Polyetheralkoholen unter Verwendung von DMC-Katalysatoren sind bekannt. So beschreibt WO 98/03571 ein Verfahren zur kontinuierlichen Herstellung von Polyetheralkoholen mittels DMC-Katalysatoren, bei dem in einem kontinuierlichen Rührkessel zunächst eine Mischung aus einem Starter und einem DMC-Katalysator vorgelegt, der Katalysator aktiviert und zu dieser aktivierten Mischung kontinuierlich weiterer Starter, Alkylenoxide und DMC-Katalysator gegeben und, nach Erreichen des angestrebten Füllstands des Reaktors, kontinuierlich Polyetheralkohol abgezogen wird.

In JP H6-16806 wird ein Verfahren zur kontinuierlichen Herstellung von Polyetheralkoholen mittels DMC-Katalysatoren ebenfalls in einem kontinuierlichen Rührkessel oder in einem Rohrreaktor beschrieben, bei dem eine aktivierte Startsubstanzmischung am Eingang vorgelegt und an verschiedenen Punkten des Rohrreaktors Alkylenoxid zudosiert wird.

Auch in DD 203 725 wird ein Verfahren zur kontinuierlichen Herstellung von Polyetheralkoholen mittels DMC-Katalysatoren beschrieben, bei dem in einem Rohrreaktor eine aktivierte Startsubstanzmischung am Eingang vorgelegt und an verschiedenen Punkten des Rohrreaktors Alkylenoxid zudosiert wird.

In WO 01/62826, WO 01/62824 und WO 01/62825 werden spezielle Reaktoren für das kontinuierliche Verfahren zur Herstellung von Polyetheralkoholen mittels DMC-Katalysatoren beschrieben.

Nachteilig bei allen der beschriebenen Verfahren zur kontinuierlichen Herstellung von Polyetheralkoholen ist es, dass der Aufbau der Polyetherkette nicht variiert werden kann. Es ist nur die Anlagerung eines Alkylenoxids oder einer vorgegebenen Mischung von Alkylenoxiden möglich.

In WO 00/14143 und WO 99/44739 werden DMC-Katalysatoren beschrieben, die auf feste Träger aufgebracht beziehungsweise zu Formkörpern verformt werden. Mittels dieser Katalysatoren kann ebenfalls eine kontinuierliche Herstellung von Polyetheralkoholen, beispielsweise bei Anordnung der Katalysatoren in einem Festbett, erfolgen. In WO 99/44739 wird beschrieben, dass die Umsetzung in mehreren hintereinander angeordneten Abschnitten erfolgen kann. Die Herstellung der DMC-Katalysatoren in der in diesen Dokumenten beschriebenen Ausgestaltung ist jedoch umständlich, und die Standzeiten derartiger geträgerter Katalysatoren ist unzureichend. Derartige Verfahren haben sich daher in der Praxis nicht durchgesetzt.

Für verschiedene Einsatzgebiete von mittels DMC-Katalysatoren hergestellten Polyetheralkoholen ist eine Modifizierung der Polyetherkette, insbesondere am Kettenende, erforderlich. Die für die Herstellung von Polyurethan-Weichschaumstoffen verwendeten Polyetherole weisen üblicherweise Polyetherketten mit einer Mischung von Ethylenoxid und Propylenoxid auf. Insbesondere für die Verwendung der Polyetheralkohole in Blockweichschäumen ist bei DMC-Polyetheralkoholen die Anlagerung von Propylenoxid am Kettenende bevorzugt, um die Reaktivität der Polyetheralkohole bei der Herstellung der Schäume einzustellen. Derartige Polyetheralkohole werden beispielsweise in WO 01/16209 beschrieben. Diese Strukturen sind mit den Verfahren des Standes der Technik nicht kontinuierlich herstellbar.

Aufgabe der Erfindung war es, ein einfaches und kostengünstiges Verfahren zu entwickeln, das die kontinuierliche Herstellung von Polyetheralkoholen mit mindestens zwei unterschiedlich aufgebauten Segmenten in der Polyetherkette ermöglicht.

Die Aufgabe konnte gelöst werden, indem nach einem üblichen Verfahren durch kontinuierliche Zugabe von Startsubstanz, mindestens einem Alkylenoxid und DMC-Katalysator das aus dem kontinuierlichen Reaktor entnommene Vorprodukt in einem weiteren kontinuierlichen Reaktor mit einem Alkylenoxid oder einer Mischung aus mindestens zwei Alkylenoxiden umgesetzt wird, wobei die Alkylenoxide beziehungsweise die Mischungen aus mindestens zwei Alkylenoxiden in den verschiedenen Reaktoren unterschiedlich sind.

Gegenstand der Erfindung ist somit ein Verfahren zur kontinuierlichen Herstellung von Polyetheralkoholen durch Anlagerung von Alkylenoxiden an H-funktionelle Startsubstanzen unter Verwendung eines DMC-Katalysators, umfassend die Schritte
a) Herstellung eines Vorprodukts durch kontinuierliche Dosierung mindestens einer H-funktionellen Startsubstanz, eines Alkylenoxids oder einer Mischung aus mindestens zwei Alkylenoxiden und der erforderlichen Menge an DMC-Katalysator in einen kontinuierlichen Reaktor,
b) kontinuierliche Entnahme des Vorprodukts aus Schritt a) aus dem Reaktor,
c) kontinuierliche Dosierung des Produkts aus Schritt a), eines von dem in Schritt a) verschiedenen Alkylenoxids oder einer von der Mischung in Schritt a) verschiedenen Mischung aus mindestens zwei Alkylenoxiden und gegebenenfalls der erforderlichen Menge an DMC-Katalysator in einen weiteren kontinuierlichen Reaktor
d) kontinuierliche Entnahme des Produkts aus Schritt c) aus dem Reaktor.

In Verfahrensschritt a) werden zwischen 50 und 98 Gew.-%, bevorzugt 80 bis 98 Gew.-% und insbesondere 83 bis 97 Gew.-% der gesamten eingesetzten Menge an Alkylenoxiden und in Verfahrenschritt c) die Restmenge des Alkylenoxids eingesetzt, wobei sich die Mengen der in den Stufen a) und c) eingesetzten Alkylenoxide zu 100 Gew.-% ergänzen.

Vorzugsweise wird in Stufe a) eine Mischung aus Ethylenoxid und Propylenoxid eingesetzt. Das Verhältnis von Propylenoxid zu Ethylenoxid liegt dabei vorzugsweise zwischen PO:EO= 30:70 und PO:EO= 98:2.

In Stufe c) erfolgt die Dosierung von einem oder mehreren Alkylenoxiden. Dabei ist das Alkylenoxid beziehungsweise die Mischung der Alkylenoxide unterschiedlich vom Alkylenoxid beziehungsweise der Mischung der Alkylenoxide in Stufe a).

Die Art und Zusammensetzung der in den Stufen a) und c) eingesetzten Alkylenoxide beziehungsweise Mischungen aus mindestens zwei Alkylenoxiden hängt von dem gewünschten Einsatzzweck der Polyetheralkohole ab.

In einer bevorzugten Ausführungsform des erfindungsgemäßen Verfahrens wird in Stufe a) eine Mischung aus Ethylenoxid und Propylenoxid in einem Gewichtsverhältnis von Propylenoxid zu Ethylenoxid PO:EO= 60:40 bis PO:EO= 95:5 in einer Menge von 70-95 Gew.-%, bezogen auf die Menge des eingesetzten Alkylenoxids, und in Stufe c) Propylenoxid eingesetzt. Derartige Polyetheralkohole werden insbesondere zur Herstellung von Polyurethan-Blockweichschaumstoffen eingesetzt.

In einer weiteren bevorzugten Ausführungsform des erfindungsgemäßen Verfahrens wird in Stufe a) eine Mischung aus Ethylenoxid und Propylenoxid in einem Gewichtsverhältnis von Propylenoxid zu Ethylenoxid PO:EO= 60:40 bis PO:EO= 95:5 in einer Menge von 50-95 Gew.-%, bezogen auf die Menge des eingesetzten Alkylenoxids, und in Stufe c) eine Mischung aus Ethylenoxid und Propylenoxid in einem Gewichtsverhältnis von Propylenoxid zu Ethylenoxid PO:EO= 80:20 bis PO:EO= 20:80 eingesetzt. Derartige Polyetheralkohole werden insbesondere zur Herstellung von Polyurethan-Formweichschaumstoffen eingesetzt.

In einer weiteren bevorzugten Ausführungsform des erfindungsgemäßen Verfahrens wird in Stufe a) reines Propylenoxid in einer Menge von 50-95 Gew.-%, bezogen auf die Gesamtmenge des Alkylenoxids, und in der zweiten Stufe eine Mischung aus Propylenoxid und Ethylenoxid in einem Gewichtsverhältnis von Propylenoxid zu Ethylenoxid PO:EO= 80:20 bis PO:EO= 20:80 eingesetzt. Derartige Polyetheralkohole werden ebenfalls zur Herstellung von Polyurethan-Formweichschaumstoffen eingesetzt.

Als Reaktoren können für die beiden Stufen der Umsetzung gleiche oder unterschiedliche Reaktoren zum Einsatz kommen. Bevorzugte Rektoren sind kontinuierlich arbeitende Rührkessel, Rohrreaktoren oder Strömungs- beziehungsweise Schlaufenreaktoren.

Derartige Reaktoren sind beispielsweise in JP H6-16806, DD 207 253, WO 01/62826, WO 01/62825 und WO 01/62824 beschrieben.

In einer bevorzugten Ausführungsform des erfindungsgemäßen Verfahrens werden in den Stufen a) und c) kontinuierlich arbeitende Rührkessel eingesetzt. Beide Reaktoren können identisch ausgeführt werden. Da auf Grund der unterschiedlichen Einsatzmengen der Alkylenoxide in den beiden genannten Stufen des Verfahrens jedoch unterschiedliche Wärmemengen frei werden, kann die Kühlung der beiden eingesetzten Reaktoren auf unterschiedliche Art erfolgen. Während in Stufe a) vorzugsweise ein Rührkessel mit außenliegendem Wärmetauscher, wie zum Beispiel in WO 01/62825 eingesetzt wird, kann in Stufe c) ein Reaktor mit einer kostengünstigen innenliegenden Kühlung, insbesondere innenliegenden Kühlschlangen, eingesetzt werden.

In WO 01/62824 wird ein Rührkesselreaktor mit innenliegenden Wärmetauscherplatten beschrieben. Auch dieser Reaktortyp ist einsetzbar.

Neben herkömmlichen Rührkesselreaktoren können auch Strahlschlaufenreaktoren mit Gasphase und externen Wärmetauschern, wie beispielsweise in EP 419 419 beschrieben, oder internen Wärmetauscherrohren, wie in WO 01/62826 beschrieben, verwendet werden. Darüber hinaus können gasphasenfreie Loop-Reaktoren eingesetzt werden.

Bei der Dosierung der Edukte ist eine gute Verteilung der Edukte, d.h. der Alkylenoxide, Starter und Katalysatorsuspension notwendig. Dies kann bei Rührkesselreaktoren durch die Verwendung von Ringverteilern geschehen, die unterhalb des Rührers oder zwischen die erste und die zweite Rührerebene eingebaut werden

Um zu gewährleisten, dass das Alkylenoxid nach Verlassen des zweiten Reaktors c) vollständig abreagiert ist, kann ein Rohrreaktor, wie in WO 03/025045 beschrieben, dem zweiten Reaktor nachgeschaltet werden. Eine Abreaktion der gesamten in Schritt a) dosierten Menge an Alkylenoxid vor dem Eintritt in den Reaktor von Schritt c) ist nicht erforderlich.

Vorzugsweise wird die Umsetzung so geführt, dass der Gehalt des im Reaktor befindlichen freien Alkylenoxids kleiner oder gleich 8 Gew.-%, bezogen auf die Gesamtmenge der im Reaktor befindlichen Edukte und Reaktionsprodukte, ist. Bei dieser Fahrweise wird der Anteil an sehr hochmolekularen Nebenprodukten, die sich bei der Schaumherstellung störend auswirken, unterdrückt.

Das Produkt aus Schritt c) wird üblicherweise nach der Entnahme d) aufgearbeitet. Zur Aufarbeitung gehört beispielsweise die Entfernung von leicht flüchtigen Bestandteilen, üblicherweise durch Vakuumdestillation, Wasserdampf- oder Gasstrippen und oder andere Methoden der Desodorierung. Hierbei ist es vorteilhaft, das Strippen unmittelbar an die Dosierung der Alkylenoxide, möglichst jedoch nicht später als 12 Stunden nach der Beendigung der Dosierung der Alkylenoxide durchzuführen.. Falls erforderlich, kann auch eine Filtration erfolgen. Die Entfernung leichtflüchtiger Nebenkomponenten kann sowohl absatzweise als auch kontinuierlich erfolgen. Bei dem vorliegenden Verfahren sollte eine kontinuierliche Entfernung der Geruchsstoffe vorgenommen werden.

Es ist möglich, den Katalysator aus dem Polyetheralkohol zu entfernen. Für die meisten Einsatzgebiete kann er jedoch im Polyetheralkohol verbleiben. Prinzipiell möglich, wenn auch nicht bevorzugt, ist es, den DMC-Katalysator abzutrennen und in Schritt a) wieder einzusetzen, wie beispielsweise in WO 01/38421 beschrieben. Diese Verfahrensweise ist jedoch für die großtechnische Herstellung von Polyetheralkoholen meist zu aufwendig.

Weiterhin ist es üblich, den Polyetheralkohol gegen den thermooxidativen Abbau zu stabilisieren. Dies erfolgt üblicherweise durch den Zusatz von Stabilisatoren, zumeist sterisch gehinderten Phenolen und/oder Aminen. Vorzugsweise wird auf den Einsatz von aminischen Stabilisatoren verzichtet.

Als Startsubstanzen kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die für Polyurethan-Weichschaumstoffe eingesetzt werden, kommen als Startsubstanzen insbesondere Alkohole mit einer Funktionalität von 2 bis 6, insbesondere von 2 und 3, zum Einsatz. Beispiele sind Glyzerin, Diglyzerin, Butandiol, Diethylenglykol, Triethylenglykol, Dipropylenglykol, Tripropylenglykol, Sorbitol, Trimethylolpropan und Rizinusöl. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Derartige Verbindungen haben vorzugsweise eine Molmasse bis 500 g/mol. Die Anlagerung der Alkylenoxide bei der Herstellung dieser Umsetzungsprodukte kann mit beliebigen Katalysatoren erfolgen, beispielsweise mit basischen Katalysatoren. Die Polyetheralkohole für die Herstellung von Polyurethan-Weichschaumstoffen haben zumeist eine Hydroxylzahl im Bereich zwischen 5 und 400 mgKOH/g, vorzugsweise 35 und 60 mgKOH/g.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole, wenn sie mittels DMC-Katalyse hergestellt werden, am Kettenende einen Propylenoxidblock. Für die Herstellung von Polyurethan-Formweichschaumstoffen werden insbesondere Polyetheralkohole mit einem hohen Gehalt an primären Hydroxylgruppen und einem Ethylenoxid-Endblock in einer Menge von < 20 Gew.-%, bezogen auf das Gewicht des Polyetheralkohols, verwendet.

Die Anlagerung der Alkylenoxide erfolgt bei den üblichen Bedingungen, bei Temperaturen im Bereich von 60 bis 180°C, bevorzugt zwischen 90 und 140°C, insbesondere zwischen 100 und 130°C und Drücken im Bereich von 0 bis 20 bar, bevorzugt im Bereich von 0 bis 10 bar und insbesondere im Bereich von 0 bis 5 bar. Die Verfahrensschritte unter a) und c) können bei identischen oder verschiedenen Temperaturen ausgeführt werden. Die im Reaktor zum Reaktionsstart vorgelegte Mischung aus Startsubstanz und DMC-Katalysator kann vor Beginn der Dosierung der Alkylenoxide gemäß der Lehre von WO 98/52689 durch Strippen vorbehandelt werden.

Die für das erfindungsgemäße Verfahren eingesetzten DMC-Katalysatoren sind bekannt und beispielsweise in EP 743 093, EP 755 716, EP 862 947, EP 862 997 oder EP 1 021 453 beschrieben. Die Katalysatoren können amorph oder kristallin sein. Unter den kristallinen DMC-Katalysatoren sind solche mit einer monoklinen Kristallstruktur bevorzugt.

Der Katalysator wird vorzugsweise in einer Menge von 15 bis 100 ppm, insbesondere in einer Menge von 20 bis 80 ppm, jeweils bezogen auf die Gesamtmasse des Polyetheralkohols, eingesetzt.

Prinzipiell kann in den Stufen a) und c) mit der gleichen Konzentration an DMC-Katalysator gearbeitet werden. Vorzugsweise wird in der Stufe c) mit der im Vorprodukt verbliebenen Menge an DMC-Katalysator weitergearbeitet. In einer weiteren Ausführungsform kann dem Vorprodukt vor dem Schritt c) weiterer DMC-Katalysator zugesetzt werden.

Vorzugsweise wird der Katalysator nur einmal in den ersten Reaktor in Schritt a) dosiert. Die Katalysatormenge ist so einzustellen, dass eine ausreichende katalytische Aktivität für beide Verfahrensschritte gegeben ist. Der Katalysator wird in Form einer etwa 5 %-igen Katalysatorsuspension dosiert. Das Katalysatorsuspensionsmittel kann beispielsweise das Produkt aus Stufe a) oder das aus Stufe c) sein. Das Molekulargewicht des Suspensionspolyetherols sollte identisch oder kleiner als das Molgewicht des Endprodukts des Prozesses sein.

Wie ausgeführt, werden die nach dem erfindungsgemäßen Verfahren hergestellten Polyetheralkohole vorzugsweise zur Herstellung von Polyurethanen eingesetzt. Insbesondere erfolgt ihr Einsatz zur Herstellung von Polyurethan-Weichschaumstoffen. Dabei ist der Einsatz von nach dem erfindungsgemäßen Verfahren hergestellten Polyetheralkoholen mit einem endständigen Block aus Propylenoxideinheiten zur Herstellung von Blockweichschaumstoffen besonders vorteilhaft. Die nach dem erfindungsgemäßen Verfahren hergestellten Polyetheralkohole unterscheiden sich in ihren Anwendungseigenschaften nicht von solchen Produkten, die vollständig im Batch-Verfahren oder durch eine batchweise Anlagerung des Endblocks hergestellt wurden.

Das erfindungsgemäße Verfahren gestattet auf einfache Weise die kontinuierliche Herstellung anspruchsvoller Polyolstrukturen nach einem kontinuierlichen Herstellungsverfahren, ohne dass es zu Nachteilen bei den Eigenschaften der Polyetheralkohole kommt. So sind die nach dem erfindungsgemäßen Verfahren hergestellten Produkte weitgehend geruchlos und frei von flüchtigen Verbindungen.

Die nach dem erfindungsgemäßen Verfahren hergestellten Polyetheralkohole mit einem Endblock aus Propylenoxideinheiten lassen sich ohne Probleme zu rissfreien Polyurethan-Weichschaumstoffen mit einer hohen Offenzelligkeit, vorzugsweise von mindestens 50, besonders bevorzugt mindestens 100 dm³/min, verarbeiten. Dabei kann das preiswerte und gut verfügbare Toluylendiisocyanat mit einem Isomerenverhältnis von 80:20 verwendet werden, während ohne die Anlagerung eines Endblocks aus Propylenoxideinheiten zur Erzielung gleichwertiger Schaumeigenschaften das teure Toluylendiisocyanat mit einem Isomerenverhältnis von 65:35 eingesetzt werden muss.

Die so erhaltenen Polyurethan-Weichschaumstoffe können insbesondere in Kraftfahrzeuginnenräumen oder zur Herstellung von Möbeln und Matratzen verwendet werden.

Die Erfindung soll an den nachfolgenden Beispielen näher beschrieben werden.

### Beispiel 1 (Vergleich) - Polyetheralkohol ohne Propylenoxid-Endblock

Zur Dispergierung des Katalysators zum Reaktionsstart wurde zunächst ein mit Kalilauge katalysiertes Polyol vorgelegt. Dieses Polyol wurde hergestellt, indem in einem 250 Liter Reaktor 17,16 kg Glyzerin vorgelegt wurden. Anschließend wurden 1,56 kg 48 %-ige Kalilauge dosiert und das Reaktionswasser im Vakuum bei < 20 mbar und 120°C abdestilliert. Anschließend wurden 6,59 kg Diethylenglykol dosiert. Binnen 5 Stunden wurden bei 125°C 226 kg Propylenoxid zugegeben. Im Anschluss an die Nachreaktion wurde 13 kg Macrosorb^{®} MP 5+ und 3,5 kg Wasser dosiert. Es wurde eine Stunde bei 90°C gerührt, dann wurde das Wasser bis zu einem Wasserwert von kleiner 0,02 % abdestilliert und das Macrosorb^{®} über Tiefenfilter abfiltriert. Das Polyol hatte eine OH-Zahl von 152,8 mg KOH/g und wies eine Alkalität von kleiner 1 ppm auf.

Dieses Polyol, im folgenden VP 900 genannt, diente zur Dispergierung des DMC-Katalysators. 10 kg VP 900 wurden vorgelegt und 1020 g feuchter Filterkuchen einer DMC-Verbindung, hergestellt gemäß der Lehre von EP 862 947, Beispiel 1, zugegeben. Die Suspension wurde mittels eines UltraTurrax ca. 20 min dispergiert. Anschließend wurde die Suspension im Vakuum 4 h bei 10 mbar getrocknet. Die trockene Suspension wies einen Katalysatorgehalt von 5,21 Ma.-% auf, bestimmt über ICP (Zn und Cobaltgehalte) und berechnet über die stöchiometrische Zusammensetzung des Katalysators.

In einen 20 Liter Reaktor wurden 2,5 kg des VP 900 vorgelegt und 0,1085 kg DMC-Suspension dosiert. Anschließend wurden bei 120 °C parallel 1,2 kg Glycerin, 0,461 kg Diethylenglykol und 16,026 kg Propylenoxid innerhalb von 5 h dosiert. Dieses Zwischenprodukt wurde dem Reaktor entnommen. Für die Endsynthese wurden 6,3 kg des hergestellten Zwischenprodukts in den 20 L Reaktor gefüllt und bei 120°C parallel 13,7 kg Propylenoxid und 1,94 kg Ethylenoxid innerhalb von 3 h dosiert.

Das Endprodukt, im Folgenden VP3000 genannt, hatte ein OH-Zahl von 48,2 mg KOH/g und wies einen DMC-Gehalt von 92 ppm auf. Die Viskosität des Produkts lag bei 618 mPas.

Für die Versuche im kontinuierlichen Reaktorsystem wurde der DMC-Katalysator wie oben im Falle des VP900 in VP3000 suspendiert und die Suspension anschließend getrocknet. Die DMC-Suspension wies einen DMC-Gehalt von 5,82 ma-% auf.

Die kontinuierliche Anlage bestand aus einem 1 Liter Kessel, der mit getrennten Zuläufen für Startermischung aus Glycerin:Diethylenglykol = 2,6:1, bezogen auf die Masse, Alkylenoxiden sowie Katalysatorsuspension ausgestattet war. Die Zuläufe der Komponenten erfolgte über HPLC-Pumpen, die Einleitung in den Reaktor erfolgte über getrennte Tauchrohre. Am Reaktorboden wurde über eine Zahnradpumpe mit nachgeschaltetem Massendurchflussmesser der Ablauf kontrolliert. Über das Prozessleitsystem wurde gewährleistet, dass der Füllstand im Reaktor stets konstant bei 90 % Füllgrad war. Das Produkt wurde in einem 100 L Sammelbehälter aufgefangen und bei 20 mbar entgast. Die Reaktionstemperatur betrug 130°C.

VP3000 wurde vorgelegt. Anschließend wurde Katalysatorsuspension dosiert, so dass sich eine rechnerische DMC-Konzentration von 150 ppm im Reaktor ergab. Die Zuläufe für Propylenoxid (0,5239 kg/h) und Ethylenoxid (0,0585 kg/h), Startermischung (0,0178 kg/h) und DMC-Suspension (0,515 g/h) wurden gestartet, wobei die angegebenen Dosiergeschwindigkeiten nach 30 min erreicht wurden. Die Verweilzeit betrug 100 min. Nach 20 Verweilzeiten waren die Produkteigenschaften konstant und Produkt mit folgenden Kennzahlen wurde gesammelt.

| | |
|---|---|
| OH-Zahl: | 48,1 mg KOH/g |
| DMC-Gehalt: | 51 ppm |
| Viskosität | 598 mPas |
| Gehalt an prim. OH-Gruppen: | 12 mol-% |
| Leichtflüchtige Bestandteile | 15000 Headspaceflächen |
| Geruch | 1,3 |

Die gesammelten Polyole wurden anschließend mit Wasserdampf gestrippt (600 kg Polyol für 4 h mit 10 kg/h Dampf bei einem Druck von 160 mbar). Von dem Produkt wurde mittels Headspace-Analytik der Gehalt an leichtflüchtigen Nebenkomponenten bestimmt, wobei nur die Summe der Headspaceflächen Berücksichtigung findet. Es ergab sich ein Wert von 15000 Flächeneinheiten.

Das Endprodukt wurde nach dem Strippen mit 4000 ppm Irgastab PUR 68 stabilisiert und verschäumt.

### Beispiel 2 (erfindungsgemäß) - Polyetherol mit 10 %igem Propylenoxid-Endblock

Es wurde die gleiche Apparatur verwendet wie in Beispiel 1. Allerdings wurde hinter den Reaktor ein weiterer Rührkessel mit einem Volumen von 1 Liter gesetzt. Das Produkt aus dem ersten Reaktor wurde hier mit weiterem Propylenoxid umgesetzt. Hinter den zweiten Reaktor wurde die Entgasungseinheit installiert, die Bedingungen für die Entgasung entsprachen den in Beispiel 1 beschriebenen Einstellungen.

Es wurde VP3000 vorgelegt. Anschließend wurde die Katalysatorsuspension dosiert, so dass sich eine rechnerische DMC-Konzentration von 150 ppm im Reaktor ergab. Die Zuläufe für Propylenoxid (0,4639 kg/h) und Ethylenoxid (0,0585 kg/h), die in Beispiel 1 beschriebene Startermischung (0,0178 kg/h) und DMC-Suspension (0,515 g/h) wurden gestartet, wobei die angegebenen Dosiergeschwindigkeiten nach 30 min erreicht wurden. Die Verweilzeit im ersten Reaktor betrug 111 Minuten. Das Produkt aus dem ersten Kessel wurde in den zweiten Kessel geleitet, in den über ein Tauchrohr 0,06 kg/h Propylenoxid zudosiert wurde, so dass sich in diesem Kessel eine Verweilzeit von 100 Minuten ergab. Beide Reaktoren wurden bei 130°C betrieben.

Nach 35 Verweilzeiten waren die Produkteigenschaften konstant und Produkt mit folgenden Kennzahlen wurde gesammelt:

| | |
|---|---|
| OH-Zahl: | 47,2 mg KOH/g |
| DMC-Gehalt: | 48 ppm |
| Viskosität | 591 mPas |
| Gehalt an prim. OH-Gruppen: | 3 mol-% |
| Leichtflüchtige Bestandteile | 13500 Headspaceflächen |
| Geruch | 1,3 |

Das Endprodukt wurde nach dem Strippen mit 4000 ppm Irgastab^{®} PUR 68 stabilisiert und verschäumt.

### Bestimmung des Geruchs nach Prüfverfahren PPU 03/03-04 vom 15.01.2001

100 g des zu untersuchenden Polyetherols wird in eine neue trockene Glasflasche (250 ml) mit Schraubverschluss eingewogen. Die Bestimmung des Geruchs erfolgt bei 25°C. Vor dem Öffnen der Glasflasche wird diese kurz umgeschwenkt. Nach der sinnlichen Geruchsprüfung wird die Glasflasche wieder fest verschlossen. Die nächste Prüfung darf erst nach 15 min erfolgen. Insgesamt erfolgt die Beurteilung von 5 fest nominierten Prüfern. Die Beurteilung des Geruchs erfolgt in folgender Bewertung:

| | |
|---|---|
| Note 1,0 | - kein Geruch |
| Note 1,3 | - leicht spürbarer Geruch |
| Note 1,5 | - spürbarer angenehmer Geruch |
| Note 1,7 | - angenehmer leicht stechender Geruch |
| Note 2,0 | - leicht unangenehmer Geruch |
| Note 3,0 | - unangenehmer Geruch |
| Note 4,0 | - riecht stark |
| Note 5,0 | - stinkt |

Nach der Geruchsbeurteilung durch 5 - 7 Prüfer wird der Geruchswert durch Mehrheitsentscheid ermittelt und dokumentiert. Kann kein Mehrheitsentscheid festgestellt werden, wird die Geruchsbewertung zu einem späteren Zeitpunkt wiederholt. Bei eingeschränkter sinnlicher Geruchsbewertung des Prüfers, wie Schnupfen, wird die Prüfung durch einen anderen nominierten Prüfer durchgeführt.

### Bestimmung des Gehalts an leichtflüchtigen Nebenbestandteilen

Das Polyol wird zunächst mit 4000 ppm BHT stabilisiert. Ca. 3 g Probe werden in 10 mL Probenflaschen eingefüllt diese mit einem hochtemperaturfesten Septa verschlossen. Anschließend wird die Probe in den Probengeber gegeben und für genau 2 h bei 140°C getempert. Dabei bildet sich über der Flüssigkeit die Gasphase ("Headspace") aus. Nach der Temperierungszeit wird die Gasphase mittels des Gaschromatographie analysiert. Die Bestimmung der Headspaceflächen erfolgt mittels Flammen-lonisations-Detektoren.

### Analysenbedingungen:

- Säule: DB- Wax (0,25 mmID, 0,25 µm Filmdicke, 30,m)
- Trägergas: Helium
- Brenngas: Wasserstoff und synth. Luft (optimiert)
- Vordruck am GC.: 7,5 psi
- Fluss: 0,5 ml/min
- Temperatur (Detektor): 250°C
- Temperatur (Injektor): 150°C
- Temperatur (Ofen): 10 min 50°C /10° / min → 240°C 20 min
- Splitverhältnis: 1:20
- Badtemperatur: 140°C (120°C)
- Valve / Loop Temp.: 150°C (130°C)
- Integrationsmethode: PO 2.MTH

### Herstellung der Polyurethan-Weichschaumstoffe

Die in Tabelle 1 genannten Ausgangsprodukte wurden in den in Tabelle 1 aufgeführten Mengenverhältnissen zur Umsetzung gebracht.

Alle Komponenten außer dem Isocaynat Lupranat^{®} T80A und Desmodur^{®} T65 wurden zunächst durch intensives Mischen zu einer Polyolkomponente vereinigt. Danach wurde das Lupranat^{®} T80 A und gegebenenfalls Desmodur^{®} T65 unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| | |
|---|---|
| Raumgewicht in kg/m³ | DIN EN ISO 845 |
| VOC Rizinusölsäurezyklus in ppm | PB VWL 709 |
| FOG Rizinusölsäurezyklus in ppm | PB VWL 709 |
| Luftdurchlässigkeit in dm³/min | DIN EN ISO 7231 |
| Stauchhärte, 40 % Verformung in kPa | DIN EN ISO 2439 |
| Dehnung in % nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |

**Tabelle 1**

| | OHZ | Beispiel 3 (V) | Beispiel 4 (V) | Beispiel 5 |
|---|---|---|---|---|
| Polyetherol, gemäß Beispiel 1 | 48,1 | 100,00 | 100,00 | |
| Polyetherol, gemäß Beispiel 2 | 47,2 | | | 100,00 |
| Tegoamin^{®} B4900 | 0 | 1,00 | 1,00 | 1,00 |
| Niax^{®} A1 | 560 | 0,05 | 0,05 | 0,05 |
| Dabco^{®} 33LV | 425,8 | 0,15 | 0,15 | 0,15 |
| Kosmos^{®} 29 | 0 | 0,20 | 0,20 | 0,20 |
| Wasser (zus.) | 6233 | 3,80 | 3,80 | 3,80 |
| Lupranat^{®} T80A - Index | | 113 | | 113 |
| Lupranat^{®} T80A : Desmodur^{®} T65 1:1 - Index | | | 113 | |

| Bemerkung | | | | |
|---|---|---|---|---|
| Startzeit in s | | 9 | 9 | 11 |
| Abbindezeit in s | | 85 | 85 | 90 |
| Steigzeit in s | | 90 | 90 | 95 |
| Luftdurchlässigkeit in dm³/min | | 38 | 150 | 154 |
| Raumgewicht in kg/m³ | | 24,8 | 24,5 | 24,7 |
| Zugfestigkeit in kPa | | 71 | 89 | 95 |
| Dehnung in % | | 76 | 99 | 119 |
| Stauchhärte, 40 % Verformung in kPa | | 4,7 | 4,2 | 4,1 |
| Druckverformungsrest in % | | 4,0 | 3,5 | 2,0 |
| Rückprall-Elastizität in % | | 39 | 41 | 45 |
| Aussehen | | feinzellig | feinzellig | feinzellig |
| Risse | | Kanalrisse | keine | keine |

## Patentansprüche

1. Verfahren zur kontinuierlichen Herstellung von Polyetheralkoholen durch Anlagerung von Alkylenoxiden an H-funktionelle Startsubstanzen unter Verwendung eines DMC-Katalysators, umfassend die Schritte
a) Herstellung eines Vorprodukts durch kontinuierliche Dosierung einer H-funktionellen Startsubstanz, eines Alkylenoxids oder einer Mischung aus mindestens zwei Alkylenoxiden und der erforderlichen Menge an DMC-Katalysator in einen kontinuierlichen Reaktor,
b) kontinuierliche Entnahme des Vorprodukts aus Schritt a) aus dem Reaktor,
c) kontinuierliche Dosierung des Produkts aus Schritt a), eines von dem in Schritt a) verschiedenen Alkylenoxids oder einer von der in Schritt a) verschiedenen Mischung aus mindestens zwei Alkylenoxiden in einen weiteren kontinuierlichen Reaktor.
d) kontinuierliche Entnahme des Produkts aus Schritt c) aus dem Reaktor, wobei in Schritt a) 50 bis 98 Gew.-% der gesamten Menge des Alkylenoxids angelagert werden.

2. Verfahren nach Anspruch 1, **dadurch gekennzeichnet, dass** in Schritt a) eine Mischung aus Ethylenoxid und Propylenoxid und in Stufe c) Propylenoxid eingesetzt wird.

3. Verfahren nach Anspruch 1, **dadurch gekennzeichnet, dass** in Schritt a) Propylenoxid und in Stufe c) eine Mischung aus Ethylenoxid und Propylenoxid eingesetzt wird.

4. Verfahren nach Anspruch 1, **dadurch gekennzeichnet, dass** in Schritt a) eine Mischung aus Ethylenoxid und Propylenoxid und in Stufe c) eine von der in Schritt a) verschiedene Mischung aus Ethylenoxid und Propylenoxid eingesetzt wird.

5. Verfahren nach Anspruch 1, **dadurch gekennzeichnet, dass** die Mischung aus Ethylenoxid und Propylenoxid in Schritt a) ein Verhältnis von Ethylenoxid zu Propylenoxid 30:70 bis 98:2 aufweist.

6. Verfahren nach Anspruch 1, **dadurch gekennzeichnet, dass** die Schritte a) und c) in kontinuierlich betriebenen Rührkesseln durchgeführt werden.

7. Verfahren nach Anspruch 1, **dadurch gekennzeichnet, dass** Schritt a) in einem kontinuierlich betriebenen Rührkessel und Schritt c) in einem Rohrreaktor durchgeführt wird.

8. Polyetheralkohole, herstellbar nach einem der Ansprüche 1 bis 7.

9. Verfahren zur Herstellung von Polyurethan-Weichschaumstoffen durch Umsetzung von. Polyisocyanaten mit Verbindungen mit mindestens zwei mit Isocyanatgruppen reaktiven Wasserstoffatomen, **dadurch gekennzeichnet, dass** als Verbindungen mit mindestens zwei mit Isocyanatgruppen reaktiven Wasserstoffatomen mindestens ein Polyetheralkohol, herstellbar nach Anspruch 1, eingesetzt wird.

## Claims

1. A process for continuously preparing polyether alcohols by adding alkylene oxides to H-functional starter substances using a DMC catalyst, comprising the steps of
a) preparing a precursor by continuously metering an H-functional starter substance, an alkylene oxide or a mixture of at least two alkylene oxides and the required amount of DMC catalyst into a continuous reactor,
b) continuously withdrawing the precursor from step a) from the reactor,
c) continuously metering the product from step a), an alkylene oxide different from that in step a) or a mixture of at least two alkylene oxides different from that in step a) into a further continuous reactor,
d) continuously withdrawing the product from step c) from the reactor, from 50 to 98% by weight of the entire amount of the alkylene oxide being added on in step a).

2. The process according to claim 1, wherein a mixture of ethylene oxide and propylene oxide is used in step a) and propylene oxide is used in stage c).

3. The process according to claim 1, wherein propylene oxide is used in step a) and a mixture of ethylene oxide and propylene oxide is used in stage c).

4. The process according to claim 1, wherein a mixture of ethylene oxide and propylene oxide is used in step a) and a mixture, other than that in step a), of ethylene oxide and propylene oxide is used in stage c).

5. The process according to claim 1, wherein the mixture of ethylene oxide and propylene oxide in step a) has a ratio of ethylene oxide to propylene oxide of from 30:70 to 98:2.

6. The process according to claim 1, wherein steps a) and c) are carried out in continuous stirred tanks.

7. The process according to claim 1, wherein step a) is carried out in a continuous stirred tank and step c) in a tubular reactor.

8. A polyether alcohol preparable according to any of claims 1 to 7.

9. A process for preparing flexible polyurethane foams by reacting polyisocyanates with compounds having at least two hydrogen atoms reactive with isocyanate groups, which comprises using at least one polyether alcohol preparable according to claim 1 as compound(s) having at least two hydrogen atoms reactive with isocyanate groups.

## Revendications

1. Procédé de préparation en continu de polyéther-alcools par addition d'oxydes d'alkylène sur des substances de départ à fonctionnalité H en utilisant un catalyseur DMC, et comprenant les étapes suivantes :
a) Préparation d'un préproduit par addition dosée continue d'une substance de départ à fonctionnalité H, d'un oxyde d'alkylène ou d'un mélange d'au moins deux oxydes d'alkylène et de la quantité nécessaire de catalyseur DMC dans un réacteur travaillant en continu,
b) Soutirage en continu du préproduit de l'étape a) du réacteur,
c) Addition dosée continue du produit de l'étape a), d'un oxyde d'alkylène différent de celui de l'étape a) ou d'un mélange d'au moins deux oxydes d'alkylène différent de celui de l'étape a), dans un autre réacteur travaillant en continu,
d) Soutirage en continu du produit de l'étape c) du réacteur, de 50 à 98% en poids de la quantité totale de l'oxyde d'alkylène étant additionnés à l'étape a).

2. Procédé suivant la revendication 1, **caractérisé en ce que**, dans l'étape a), on met en oeuvre un mélange d'oxyde d'éthylène et d'oxyde de propylène et, dans l'étape c), de l'oxyde de propylène.

3. Procédé suivant la revendication 1, **caractérisé en ce que**, dans l'étape a), on met en oeuvre de l'oxyde de propylène et, dans l'étape c), un mélange d'oxyde d'éthylène et d'oxyde de propylène.

4. Procédé suivant la revendication 1, **caractérisé en ce que**, dans l'étape a), on met en oeuvre un mélange d'oxyde d'éthylène et d'oxyde de propylène et, dans l'étape c), un mélange d'oxyde d'éthylène et d'oxyde de propylène différent de celui de l'étape a).

5. Procédé suivant la revendication 1, **caractérisé en ce que** le mélange d'oxyde d'éthylène et d'oxyde de propylène de l'étape a) présente une proportion de l'oxyde d'éthylène par rapport à l'oxyde de propylène de 30 : 70 à 98 : 2.

6. Procédé suivant la revendication 1, **caractérisé en ce que** les étapes a) et c) sont entreprises dans des cuves d'agitation travaillant en continu.

7. Procédé suivant la revendication 1, **caractérisé en ce que** l'étape a) est entreprise dans une cuve d'agitation travaillant en continu et l'étape c) dans un réacteur tubulaire.

8. Polyéther-alcools que l'on peut préparer suivant d'une des revendications 1 à 7.

9. Procédé de préparation de mousses de polyuréthanne souples par réaction de polyisocyanates avec des composés comportant au moins deux atomes d'hydrogène réactifs à des groupes isocyanate, **caractérisé en ce que** l'on met en oeuvre en tant que composés comportant au moins deux atomes d'hydrogène réactifs à des groupes isocyanate au moins un polyéther-alcool que l'on peut préparer suivant la revendication 1.
